# EUROPEAN PATENT APPLICATION

(11) **EP 4 650 215 A1**
(43) Date of publication of application: **19.11.2025**
(21) Application number: 25156891.1
(22) Date of filing: 10.02.2025
(51) Int. Cl.: B60L 53/80, B60L 53/63, B60L 58/12, H02J 7/00, H01M 10/44, B60L 53/53

(54) **HYBRID BATTERY CHARGING METHOD AND BATTERY ENERGY STATION THEREOF**

(30) Priority: 14.05.2024 TW 113117747
(71) Applicant: KWANG YANG MOTOR CO., LTD., Kaohsiung 80794 (TW)
(72) Inventor: HSU, Chi-Hui, 11501 Taipei City (TW)
(74) Representative: Stöckeler, Ferdinand

(57) **Abstract**

A hybrid battery charging method is characterized by: obtaining a plurality of battery levels corresponding respectively to a plurality of batteries (112); classifying the plurality of batteries (112) into a first group and a second group; performing a first energy allocation operation on each battery (112) in the first group; performing a second energy allocation operation on each battery (112) in the second group; and charging each individual battery (112) based on the corresponding current thus allocated to each individual battery (112). A battery energy station (100) is characterized by: an energy module (120) having an electric current; a battery storage system (110) including a plurality of batteries (112); and a processing unit (140) coupled to the energy module (120) and the battery storage system (110), and configured to implement the hybrid battery charging method.

## Description

The disclosure relates to a battery charging method and a battery energy station thereof, and more particularly to a hybrid battery charging method that can manage a battery charging schedule in a hybrid mode based on battery status under the premise of a specific charging current, and a battery energy station thereof.

In recent years, along with a rise in environmental awareness and advancements in electric vehicle technology, developing electric vehicles that use electric energy as a power source to replace traditional vehicles that use fossil fuels as a power source has gradually become an important goal in the automotive field, thus increasing popularity of electric vehicles. To increase range of and consumers willingness to use electric vehicles, many countries or cities have begun to plan to set up charging stations and battery energy stations in public places in order to provide electric cars and/or electric motorcycles with a way to charge up or exchange batteries, making the use of electric vehicles more convenient.

Along with the increase in popularity of electric vehicles, demand for electricity has also increased accordingly. Since upgrading existing power plants and power grids can be extremely costly and time-consuming, if electricity needs of various fields need to be met at the same time, such as industrial electricity consumption, household electricity consumption and public electricity consumption, etc., serious burden will be placed on the existing power grids, increasing risk of power trips and power outages. In response to the risk to power grids, power plants and electricity consumers (e.g., manufacturers of charging stations/battery energy stations) can collaborate on energy regulation agreements, such as using demand responses to manage power grid electricity consumption. For example, during peak hours of electricity consumption, power plants can notify relevant consumers (i.e., manufacturers of charging stations/battery energy stations) to lower their electricity usage demands, and reward the consumers with specific incentives.

Generally speaking, when power grids are at off-peak hours of electricity consumption, electricity consumers (e.g., charging stations/battery energy stations) can proceed with charging according to the originally designed charging rules. For example, during off-peak hours of electricity consumption, a battery energy station can charge its stored batteries at maximum efficiency. However, when the power grids are at peak hours of electricity consumption, and need to cooperate with power plants for energy regulation, electricity consumers must implement specific charging rules in order to meet electricity usage demands under energy regulation. How to maintain normal functioning of power grids and, at the same time, meet the energy usage demands of users is an urgent problem that the industry has to solve.

Therefore, an object of the disclosure is to provide a hybrid battery charging method and a battery energy station that can alleviate at least one of the drawbacks of the prior art.

According to an aspect of the disclosure, there is provided a hybrid battery charging method according to claim 1.

According to another aspect of the disclosure, there is provided a battery energy station according to claim 7.

Other features and advantages of the disclosure will become apparent in the following detailed description of the embodiment(s) with reference to the accompanying drawings. It is noted that various features may not be drawn to scale.
Fig. 1 is a schematic diagram illustrating a battery energy station according to an embodiment of the present disclosure.
Fig. 2 is a schematic diagram illustrating a battery energy station according to another embodiment of the present disclosure.
Fig. 3 is a flow chart illustrating a hybrid battery charging method according to a first embodiment of the present disclosure.
Fig. 4 is a flow chart illustrating a hybrid battery charging method according to a second embodiment of the present disclosure.
Fig. 5 is a flow chart illustrating a hybrid battery charging method according to a third embodiment of the present disclosure.
Fig. 6 is a flow chart illustrating a hybrid battery charging method according to a fourth embodiment of the present disclosure.
Fig. 7 is a flow chart illustrating a hybrid battery charging method according to a fifth embodiment of the present disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

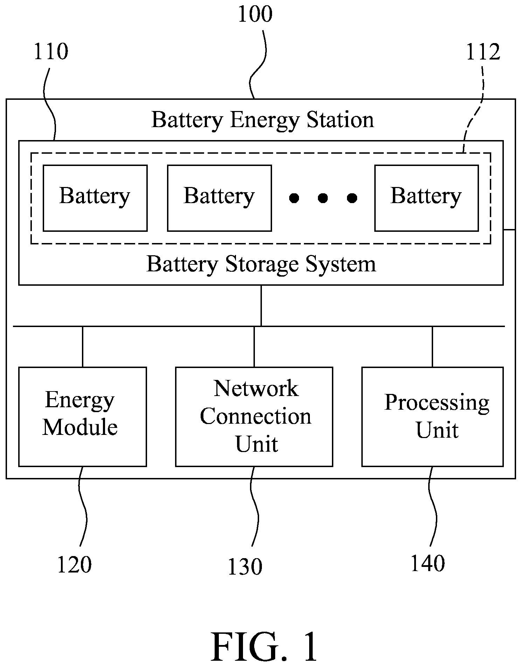

Fig. 1 illustrates a battery energy station 100 according to an embodiment of the present disclosure. The battery energy station 100 may be implemented by using an electronic device. As shown in Fig. 1, the battery energy station 100 at least includes a battery storage system 110, an energy module 120, a network connection unit 130 and a processing unit 140. The battery storage system 110 has a specific mechanism (not shown) that can store a plurality of batteries 112, and can selectively lock or release the batteries 112. The battery energy station 100 can provide one or more battery to at least one electrical device, such as an electric motorcycle or an electric car. The energy module 120 can be electrically coupled to a power grid (not shown), thereby obtaining a total electric current to supply to the battery energy station 100, and charge the batteries 112 according to a signal from the processing unit 140. It should be noted that the battery storage system 110 may have charging modules that correspond respectively to the batteries 112, wherein each of the charging modules has an upper current limit and/or a lower current limit for charging the corresponding battery. It is worth noting that in some embodiments, the energy module 120 may automatically detect the total electric current provided by the power grid to the battery energy station 100, and notify the processing unit 140 of the data corresponding to the total electric current. The network connection unit 130 can be connected to a network, so as to provide the battery energy station 100 with network connection capability. In some embodiments, the network may be a wired network, a telecommunications network, or a wireless network, such as a Wi-Fi network, etc. The processing unit 140 can be configured to control all hardware and software operations of the battery energy station 100, and to execute the hybrid battery charging method of the present disclosure, details of which will be described later.

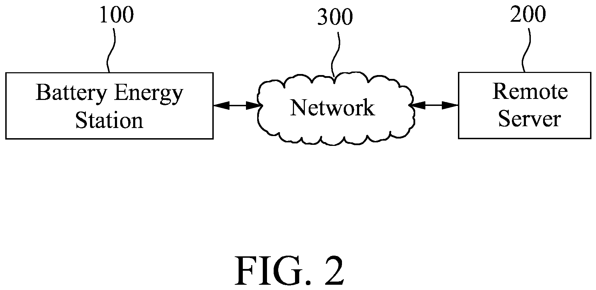

Fig. 2 illustrates a battery energy station 100 according to another embodiment of the disclosure. Similar to above, the battery energy station 100 according to this embodiment of the disclosure may be implemented by using an electronic device, and includes a plurality of batteries 112 that can be provided to at least one electrical device, such as an electric motorcycle or an electric car. The battery energy station 100 may include elements similar to those shown in Fig. 1, which will not be described again here. The battery energy station 100 can utilize a network connection unit 130 to connect to a remote server 200 through a network 300, such as a wired network, a telecommunications network, or a wireless network (e.g., Wi-Fi network), etc. It should be noted that in some embodiments, the remote server 200 may simultaneously manage other battery energy stations at the same location or at different locations. As mentioned above, an energy module 120 of the battery energy station 100 may automatically detect a total electric current provided by a power grid to the battery energy station 100, and notify the processing unit 140 of the data corresponding to the total electric current. In some embodiments, the remote server 200 can also, through the network 300, notify the battery energy station 100 of the data corresponding to the total electric current, and the battery energy station 100 can manage charging based on the data received.

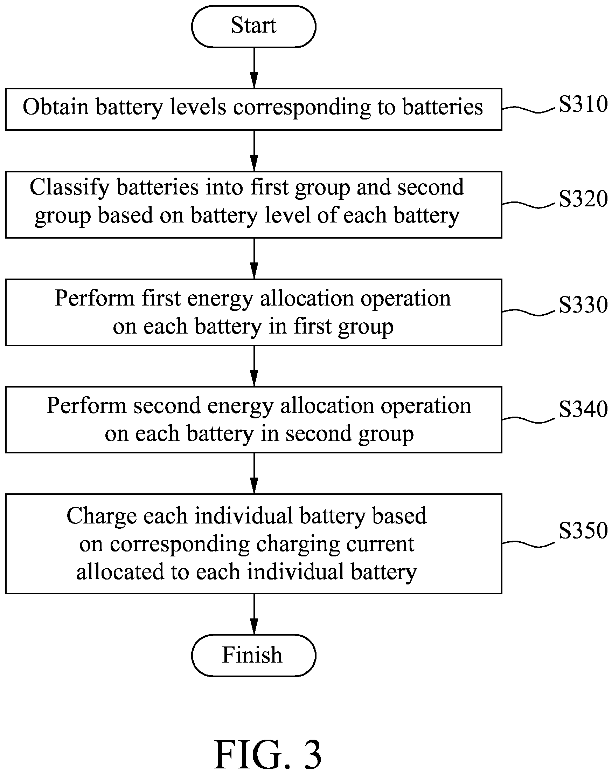

Fig. 3 illustrates a hybrid battery charging method according to a first embodiment of the present disclosure. The hybrid battery charging method may be adapted to be implemented by an electronic device that stores and charges a plurality of batteries (e.g., the battery energy station shown in Fig. 1).

First, in step S310, a plurality of battery levels corresponding respectively to the batteries are obtained. It should be noted that in some embodiments, the charging module of the battery energy station can send a signal for battery level detection to a battery electrically coupled thereto, thereby obtaining a battery level corresponding to the battery.

Then, in step S320, the batteries are classified into a first group and a second group based on a battery level of each battery, wherein the battery level of each battery in the first group is not higher than a predetermined battery level, and the battery level of each battery in the second group is higher than the predetermined battery level. In some embodiments, the predetermined battery level may be set to a predetermined amount of electricity provided by an energy source, such as 90% of a total battery level. It is worth noting that the aforementioned predetermined battery level or the predetermined amount of electricity is only an example of the present disclosure, and the present disclosure should not be limited thereto.

In step S330, a first energy allocation operation is performed on each battery in the first group. The first energy allocation operation is to sequentially allocate a charging current to each battery in the first group in an order from a battery with a highest battery level to a battery with a lowest battery level. In some embodiments, the charging current allocated may be a highest current acceptable to a charging module corresponding to the battery, such as 17A (amperes). As mentioned above, each battery may have a corresponding charging module, and each charging module has an upper current limit and/or a lower current limit for charging the corresponding battery. It is worth noting that the upper current limit and the lower current limit of each charging module may differ from one charging module to another charging module due to differences in brands and design specifications.

In step S340, a second energy allocation operation is performed on each battery in the second group. The second energy allocation operation is to evenly allocate a remaining current to each battery in the second group, wherein the remaining current is obtained by deducting the charging current allocated in the first energy allocation operation from a total electric current of the electronic device.

Then, in step S350, each individual battery is charged based on the corresponding charging current allocated to the each individual battery.

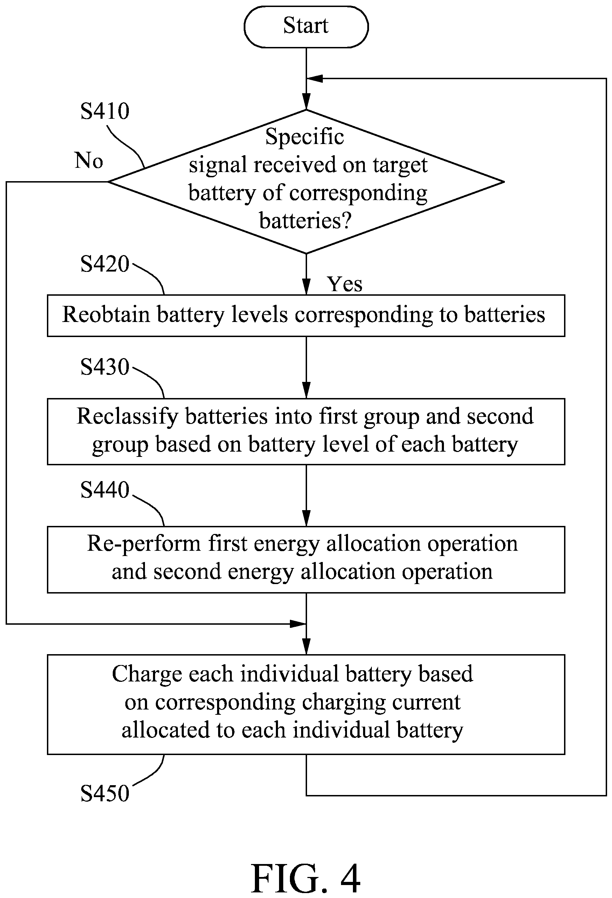

Fig. 4 illustrates a hybrid battery charging method according to a second embodiment of the present disclosure. The hybrid battery charging method may be adapted to be implemented by an electronic device that stores and charges a plurality of batteries (e.g., the battery energy station shown in Fig. 1). In this embodiment, a charging schedule can be adjusted based on receiving a specific signal.

First, in step S410, a determination is made on whether a specific signal has been received on a target battery of the corresponding batteries. It is worth noting that in some embodiments, the specific signal may be used to provide notification that the target battery is fully charged. In some embodiments, the specific signal may be used to provide notification that a charging need corresponding to the target battery has changed.

When it is determined that the specific signal has not been received (No in step S410), in step S450, each individual battery is charged based on the corresponding charging current originally allocated to the each individual battery.

When it is determined that the specific signal corresponding to the target battery has been received (Yes in step S410), in step S420, a plurality of battery levels corresponding respectively to the batteries is reobtained, and in step S430, the batteries are reclassified into a first group and a second group based on the battery level of each battery. Similar to above, the battery level of each battery in the first group is not higher than a predetermined battery level, and the battery level of each battery in the second group is higher than the predetermined battery level. Then, in step S440, the aforementioned first energy allocation operation is re-performed on each battery in the first group, and the aforementioned second energy allocation operation is re-performed on each battery in the second group. Similar to above, the first energy allocation operation is to sequentially allocate a charging current to each battery in the first group in an order from a battery with a highest battery level to a battery with a lowest battery level. The second energy allocation operation is to evenly allocate a remaining current to each battery in the second group, wherein the remaining current is obtained by deducting the charging current allocated in the first energy allocation operation from a total electric current of the electronic device. Then, in step S450, each individual battery is charged based on the corresponding charging current allocated to the each individual battery.

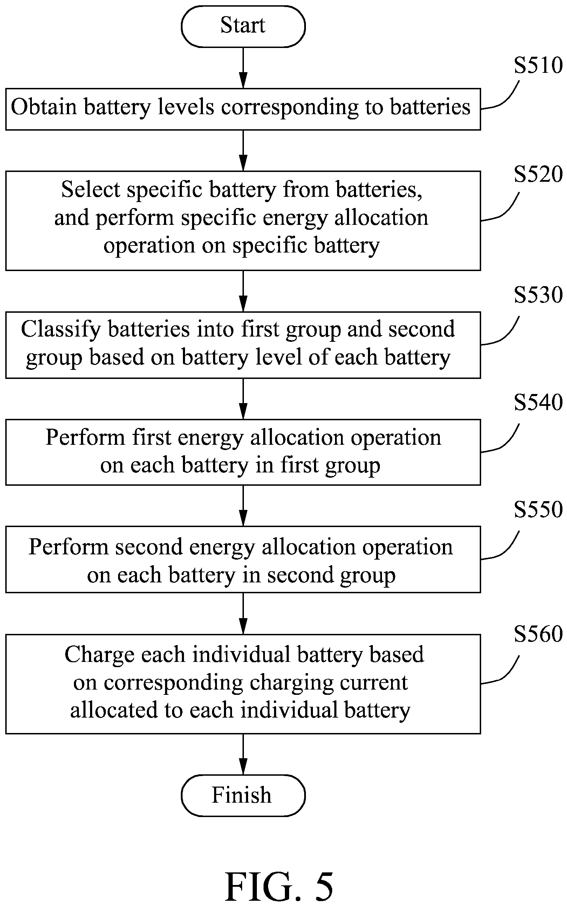

Fig. 5 illustrates a hybrid battery charging method according to a third embodiment of the present disclosure. The hybrid battery charging method may be adapted to be implemented by an electronic device that stores and charges a plurality of batteries (e.g., the battery energy station shown in Fig. 1).

First, in step S510, a plurality of battery levels corresponding respectively to the batteries are obtained. Similar to above, in some embodiments, a charging module of a battery energy station can send a signal for battery level detection to a battery electrically coupled thereto, thereby obtaining a battery level corresponding to the battery.

Then, in step S520, a specific battery is selected from the batteries, and a specific energy allocation operation is performed on the specific battery. The specific energy allocation operation is to allocate a predetermined charging current (e.g., 1A) to the specific battery. It is worth noting that the specific battery is to be used to backfeed energy to the electronic device under a specific condition. It is also worth noting that in some embodiments, a battery that has the lowest battery level may be selected from the batteries as the specific battery. In some embodiments, a battery with a battery level that is higher than a first battery level and that is the lowest among the battery levels may be selected as the specific battery. It should be noted that the aforementioned ways of selecting the specific battery and the predetermined charging current are only examples of the present disclosure, and the present disclosure should not be limited thereto.

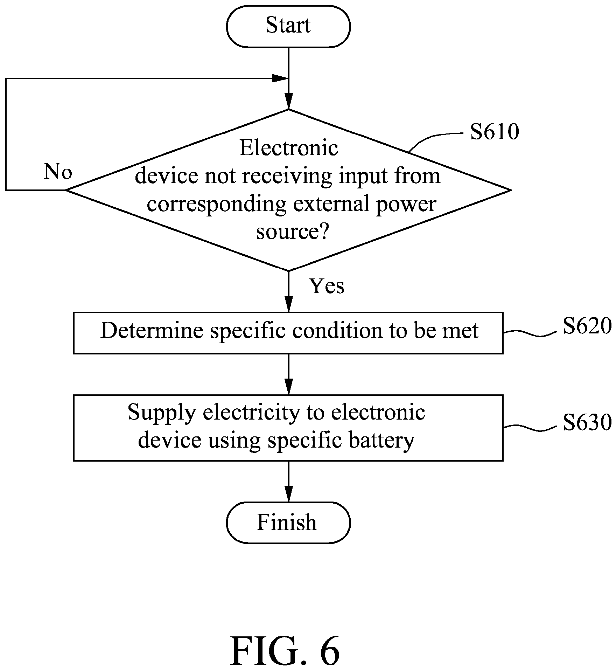

Fig. 6 illustrates a hybrid battery charging method according to a fourth embodiment of the present disclosure. In this embodiment the aforementioned specific condition may be set as the electronic device not having received power from an external input. First, in step S610, a determination is made on whether the electronic device is not receiving input from a corresponding external power source. When the electronic device is receiving input from the corresponding external power source (No in step S610), the determination in step S610 continues. When the electronic device is not receiving input from the corresponding external power source (Yes in step S610), the specific condition is determined as having been met (step S620), and electricity is supplied to the electronic device using the specific battery (step S630).

Continuing with the method flow in Fig. 5, in step S530, the batteries are classified into a first group and a second group based on the battery levels obtained corresponding respectively to the batteries. A battery level of each battery in the first group is not higher than a predetermined battery level, and a battery level of each battery in the second group is higher than the predetermined battery level. Similar to above, in some embodiments, the predetermined battery level may be set to a predetermined amount of electricity provided by an energy source, such as 90% of a total battery level. It is worth noting that the aforementioned predetermined battery level or the predetermined amount of electricity is only an example of the present disclosure, and the present disclosure should not be limited thereto.

In step S540, a first energy allocation operation is performed on each battery in the first group. The first energy allocation operation is to sequentially allocate a charging current to each battery in the first group in an order from a battery with a highest battery level to a battery with a lowest battery level. In some embodiments, the charging current allocated to a battery may be a highest current acceptable to a charging module corresponding to the battery. As mentioned above, each battery may have a corresponding charging module, and each charging module has an upper current limit and/or a lower current limit for charging the corresponding battery. Similar to above, the upper current limit and the lower current limit of each charging module may differ from one charging module to another charging module due to differences in brands and design specifications.

In step S550, a second energy allocation operation is performed on each battery in the second group. The second energy allocation operation is to evenly allocate a remaining current to each battery in the second group, wherein the remaining current is obtained by deducting the charging current allocated in the first energy allocation operation from the total electric current of the electronic device.

Then, in step S560, each individual battery is charged based on the corresponding charging current allocated to the each individual battery.

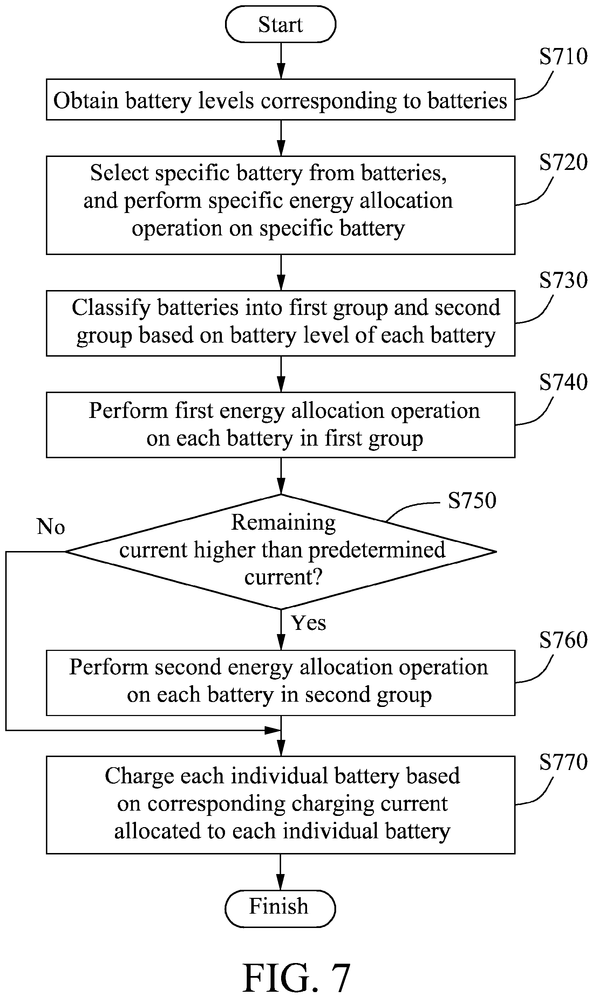

Fig. 7 illustrates a hybrid battery charging method according to a fifth embodiment of the present disclosure. The hybrid battery charging method may be adapted to be implemented by an electronic device that stores and charges a plurality of batteries (e.g., the battery energy station shown in Fig. 1).

First, in step S710, a plurality of battery levels corresponding respectively to the batteries are obtained. Similar to above, in some embodiments, a charging module of a battery energy station can send a signal for battery level detection to a battery electrically coupled thereto, thereby obtaining a battery level corresponding to the battery.

Then, in step S720, a specific battery is selected from the batteries, and a specific energy allocation operation is performed on the specific battery. The specific energy allocation operation is to allocate a predetermined charging current (e.g., 1A) to the specific battery. It is worth noting that the specific battery is to be used to backfeed energy to the electronic device under a specific condition. Similar to above, in some embodiments, a battery that has the lowest battery level may be selected from the batteries as the specific battery. In some embodiments, a battery with a battery level that is higher than a first battery level and that is the lowest among the battery levels may be selected as the specific battery. It should be noted that the aforementioned ways of selecting the specific battery and the predetermined charging current are only examples of the present disclosure, and the present disclosure should not be limited thereto.

Then, in step S730, the batteries are classified into a first group and a second group based on the battery levels obtained corresponding respectively to the batteries. A battery level of each battery in the first group is not higher than a predetermined battery level, and a battery level of each battery in the second group is higher than the predetermined battery level. Similar to above, in some embodiments, the predetermined battery level may be set to a predetermined amount of electricity provided by an energy source, such as 90% of a total battery level. It is worth noting that the aforementioned predetermined battery level or the predetermined amount of electricity is only an example of the present disclosure, and the present disclosure should not be limited thereto.

In step S740, a first energy allocation operation is performed on each battery in the first group. The first energy allocation operation is to sequentially allocate a charging current to each battery in the first group in an order from a battery with a highest battery level to a battery with a lowest battery level. As mentioned above, each battery may have a corresponding charging module, and each charging module has an upper current limit and/or a lower current limit for charging the corresponding battery. Similar to above, the upper current limit and the lower current limit of each charging module may differ from one charging module to another charging module due to differences in brands and design specifications. Note that the charging current sequentially allocated to a battery may be a highest current required by or acceptable to the battery/charging module. Only when a remaining current is less than a highest current required by or acceptable to subsequent batteries/charging modules will the remaining current be allocated to the subsequent batteries for charging. For example, when the total electric current is 40A, and the highest current required by or acceptable to each battery/charging module is 17A, a charging current of 17A can be allocated to a battery A that has the highest battery level in the first group; a charging current of 17A can be allocated to a battery B that has a second highest battery level in the first group; and a remaining charging current of 6A can be allocated to a battery C that has a third highest battery level in the first group. If there is a battery D that has a fourth highest battery level in the first group, the battery D will not be allocated a charging current in the first energy allocation operation.

Then, in step S750, a determination is made on whether a remaining current is higher than a predetermined current. The remaining current is obtained by deducting the predetermined charging current allocated in the specific energy allocation operation and the charging current allocated in the first energy allocation operation from the total electric current. It should be noted that the predetermined current can be set according to different needs and applications.

When the remaining current is higher than the predetermined current (Yes in step S750), in step S760, a second energy allocation operation is performed on each battery in the second group. The second energy allocation operation is to evenly allocate the remaining current of the electronic device to each battery in the second group. Then, in step S770, each individual battery is charged based on the corresponding charging current allocated to the each individual battery. When the remaining current is not higher than the predetermined current (No in step S750), a flow of the method proceeds to step S770 (i.e., the second energy allocation operation is not performed).

As mentioned above, the electronic device can provide batteries according to a demand of a user. In some embodiments, the battery energy station/electronic device may receive a battery demand. It is worth noting that in some embodiments, the user may insert at least one old battery into the battery energy station in order to trigger the battery demand. In some embodiments, the user may generate the battery demand via a user interface of the battery energy station. In response to the battery demand, the battery energy station/electronic device may select from the batteries at least one candidate battery with a corresponding battery level higher than a specific battery level ratio, and make the candidate battery available to be taken out from the battery energy station. It should be noted that the specific battery level ratio may be set according to different applications and demands.

Therefore, through the hybrid battery charging method and the battery energy station of the present disclosure, the battery charging schedule can be managed in a hybrid mode based on battery status under the premise of a specific charging current, thereby preventing further increase in load on the power grid during peak hours of electricity consumption, and at the same time meeting battery charging needs of the battery energy station and battery access needs of users.

The method of the present disclosure, or a specific form or part thereof, may be embodied using a program code. The program code may be contained in a physical medium, such as a floppy disk, optical disk, hard disk, or any other machine-readable (e.g., computer-readable) storage medium, or a computer program product not limited to external forms. When the program code is loaded and executed by a machine (e.g., computer), the machine becomes a device involved in the present disclosure. The program code may also be transmitted through transmission media, such as wires or cables, optical fiber, or any transmission modes. When the program code is received, loaded and executed by a machine (e.g., computer), the machine becomes a device involved in the present disclosure. When implemented on a general-purpose processing unit, the program code combined with the processing unit provides a unique device that operates similarly to application-specific logic circuits.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A hybrid battery charging method, adapted to be implemented by an electronic device used for storing and charging a plurality of batteries (112), the electronic device having a total electric current, the hybrid battery charging method **characterized by** steps of:
obtaining a plurality of battery levels corresponding respectively to the plurality of batteries (112);
based on the plurality of battery levels thus obtained, classifying the plurality of batteries (112) into a first group and a second group, wherein a battery level of each battery in the first group is not higher than a predetermined battery level, and a battery level of each battery in the second group is higher than the predetermined battery level;
performing a first energy allocation operation on each battery in the first group, wherein the first energy allocation operation is to sequentially allocate a charging current to each battery in the first group in an order from a battery with a highest battery level to a battery with a lowest battery level, and the charging current thus allocated is a highest current acceptable to a charging module corresponding to the battery;
performing a second energy allocation operation on each battery in the second group, wherein the second energy allocation operation is to evenly allocate a remaining current to each battery in the second group, wherein the remaining current is obtained by deducting the charging current thus allocated in the first energy allocation operation from the total electric current; and
charging each individual battery of the plurality of batteries (112) based on the corresponding charging current thus allocated to said each individual battery.

2. The hybrid battery charging method as claimed in claim 1, further comprising steps of:
prior to the first energy allocation operation and the second energy allocation operation, selecting a specific battery from the plurality of batteries (112), wherein the specific battery is to be used to backfeed energy to the electronic device under a specific condition;
performing a specific energy allocation operation on the specific battery, wherein the specific energy allocation operation is to allocate a predetermined charging current to the specific battery; and
charging the specific battery based on the predetermined charging current.

3. The hybrid battery charging method as claimed in claim 2, further comprising steps of:
determining whether the electronic device is not receiving input from a corresponding external power source; and
when it is determined that the electronic device is not receiving input from a corresponding external power source, determining that the specific condition has been met, and using the specific battery to supply electricity to the electronic device.

4. The hybrid battery charging method as claimed in claim 2, further comprising steps of:
determining whether, after the first energy allocation operation is complete, the remaining current after deducting from the total electric current the charging current thus allocated in the first energy allocation operation and the predetermined charging current is higher than a predetermined current; and
when the remaining current is higher than the predetermined current, performing the second energy allocation operation.

5. The hybrid battery charging method as claimed in any one of claims 1 to 4, further comprising steps of:
receiving a specific signal from a target battery in the first group;
in response to receiving the specific signal, reobtaining the plurality of battery levels corresponding respectively to the plurality of batteries (112);
based on the plurality of battery levels corresponding respectively to the plurality of batteries (112) thus reobtained, reclassifying the plurality of batteries (112) into the first group and the second group; and
re-performing the first energy allocation operation and the second energy allocation operation.

6. The hybrid battery charging method as claimed in claim 5, wherein the specific signal is used to provide one of a notification that the target battery is fully charged, and a notification that a charging need corresponding to the target battery has changed.

7. A battery energy station (100) **characterized by**:
an energy module (120) having a total electric current;
a battery storage system (110) including a plurality of batteries (112); and
a processing unit (140) coupled to said energy module (120) and said battery storage system (110), and configured to
obtain a plurality of battery levels corresponding respectively to the plurality of batteries (112),
based on the plurality of battery levels thus obtained, classify the plurality of batteries (112) into a first group and a second group, wherein a battery level of each battery in the first group is not higher than a predetermined battery level, and a battery level of each battery in the second group is higher than the predetermined battery level,
perform a first energy allocation operation on each battery in the first group, wherein the first energy allocation operation is to sequentially allocate a charging current to each battery in the first group in an order from a battery with a highest battery level to a battery with a lowest battery level, and the charging current thus allocated to each battery is a highest current acceptable to a charging module corresponding to the battery,
perform a second energy allocation operation on each battery in the second group, wherein the second energy allocation operation is to evenly allocate a remaining current to each battery in the second group, wherein the remaining current is obtained by deducting the charging current thus allocated in the first energy allocation operation from the total electric current, and
charge each individual battery of the plurality of batteries (112) based on the corresponding charging current thus allocated to said each individual battery.

8. The battery energy station (100) as claimed in claim 7, wherein said processing unit (140) is further configured to, prior to the first energy allocation operation and the second energy allocation operation,
select a specific battery from the plurality of batteries (112), wherein the specific battery is to be used to backfeed energy to said battery energy station (100) under a specific condition,
perform a specific energy allocation operation on the specific battery, wherein the specific energy allocation operation is to allocate a predetermined charging current to the specific battery, and
charge the specific battery based on the predetermined charging current.

9. The battery energy station (100) as claimed in claim 8, wherein said processing unit (140) is further configured to:
determine whether said battery energy station (100) is not receiving input from a corresponding external power source; and
when it is determined that said battery energy station (100) is not receiving input from the corresponding external power source, determine that the specific condition has been met, and use the specific battery to supply electricity to said battery energy station (100).

10. The battery energy station (100) as claimed in claim 8, wherein said processing unit (140) is further configured to:
determine whether, after the first energy allocation operation is complete, the remaining current after deducting from the total electric current the charging current thus allocated in the first energy allocation operation and the predetermined charging current is higher than a predetermined current; and
when the remaining current is higher than the predetermined current, perform the second energy allocation operation.

11. The battery energy station (100) as claimed in any one of claims 7 to 10, wherein said processing unit (140) is further configured to:
receive a specific signal from a target battery in the first group;
in response to receiving the specific signal, reobtain the plurality of battery levels corresponding respectively to the plurality of batteries (112);
based on the plurality of battery levels corresponding respectively to the plurality of batteries (112) thus reobtained, reclassify the plurality of batteries (112) into the first group and the second group; and
re-perform the first energy allocation operation and the second energy allocation operation.

12. The battery energy station (100) as claimed in claim 11, wherein the specific signal is used to provide one of a notification that the target battery is fully charged, and a notification that a charging need corresponding to the target battery has changed.
